# EUROPÄISCHE PATENTSCHRIFT

(11) **EP 1 537 441 B1**
(45) Veröffentlichungstag und Bekanntmachung des Hinweises auf die Patenterteilung: **01.09.2010**
(21) Anmeldenummer: 03794835.3
(22) Anmeldetag: 12.07.2003
(51) Int. Cl.: G01S 13/93, B60K 31/00, B60T 8/00

(54) **FAHRERASSISTENZSYSTEM FÜR EIN STRASSENFAHRZEUG**
DRIVER ASSISTANCE SYSTEM FOR A ROAD VEHICLE
SYSTEME D'ASSISTANCE AU CHAUFFEUR POUR VEHICULE ROUTIER

(30) Priorität: 10.09.2002 DE 10241922
(43) Veröffentlichungstag der Anmeldung: 08.06.2005
(73) Patentinhaber: Bayerische Motoren Werke Aktiengesellschaft, 80809 München (DE)
(72) Erfinder: KOPF, Matthias, 82048 Pullach (DE); SIMON, Julien, 80801 München (DE)
(86) Internationale Anmeldenummer: PCT/EP2003/007564
(87) Internationale Veröffentlichungsnummer: WO 2004/025323

(56) Entgegenhaltungen:
- DE-A- 3 147 598
- DE-A- 19 637 210
- US-A- 5 633 642

## Beschreibung

Die Erfindung betrifft ein Fahrerassistenzsystem für ein Strassenfahrzeug und ein Verfahren zum Betreiben eines derartigen Fahrerassistenzsystems, wobei von dem Fahrerassistenzsystem Umgebungsinformationen über eine Umgebung des Fahrzeuges erfasst werden und eine Bewegungsrichtung und/oder eine Geschwindigkeit des Fahrzeuges abhängig von den Umgebungsinformationen beeinflusst werden.

Derartige Fahrerassistenzsysteme sind bereits bekannt. Je nach Ausgestaltung erfüllen sie unterschiedliche Aufgaben, die sonst allein einem Fahrer obliegen. Bei einer Ausgestaltung werden über eine Kamera Bilder einer vor dem fahrenden Fahrzeug liegenden Fahrbahn aufgenommen und ausgewertet. Insbesondere anhand von Fahrbahnmarkierungen, die in der Mitte oder am Rand der Fahrbahn liegen, können auf diese Weise Informationen darüber gewonnen werden, ob das Fahrzeug einen ausreichenden Abstand zu dem Rand, der Mitte und/oder einer Spurbegrenzung der Fahrbahn hat. Das Fahrerassistenzsystem kann dann, falls erforderlich, die Bewegungsrichtung des Fahrzeuges beeinflussen, beispielsweise damit das Fahrzeug nicht unbeabsichtigt eine Fahrspur verlässt.

Eine weitere Ausgestaltung eines Fahrerassistenzsystems der eingangs genannten Art wird in der DE 198 04 641 A1 beschrieben: Abhängig von dem Abstand zu einem vorausfahrenden Fahrzeug beeinflusst das System die Fahrgeschwindigkeit des Fahrzeuges.

Fahrerassistenzsysteme der eingangs genannten Art entlasten einerseits den Fahrer, indem sie ihm zumindest teilweise die Aufgabe abnehmen, unter Verwendung von Informationen über die Umgebung des Fahrzeuges Maßnahmen zum Führen des Fahrzeuges zu ergreifen. Andererseits gibt es Fahrsituationen, in denen das Fahrerassistenzsystem nicht oder nicht zuverlässig betrieben werden kann, weil Grenzen eines Betriebsbereiches, für den das Fahrerassistenzsystem ausgelegt ist, erreicht oder überschritten sind. Beachtet der Fahrer die entsprechenden Systemgrenzen nicht und verlässt sich auch in diesen Fahrsituationen auf das System, kann es zu Verkehrskonflikten kommen.

Der Oberbegriff des Anspruchs 1 ist aus der US 5 633 642 A bekannt.

Aufgabe der vorliegenden Erfindung ist es, ein Verfahren und ein Fahrerassistenzsystem der eingangs genannten Art anzugeben, die einen konfliktfreien Einsatz des Fahrerassistenzsystems ermöglichen.

Zur Lösung der Aufgabe wird das Verfahren des Anspruchs 1 und das System des Anspruchs 4, vorgeschlagen.

Unter "zuverlässig betreiben" wird wie oben beschrieben verstanden, dass das Fahrerassistenzsystem innerhalb eines Betriebsbereiches betrieben wird, für den es ausgelegt ist. Entsprechende Systemgrenzen des Betriebsbereiches oder der Betriebsbereiche können aus unterschiedlichen Gründen vorliegen. Beispielsweise kann ein Sensor des Systems innerhalb oder außerhalb eines bestimmten Wertebereiches einer zu erfassenden Beobachtungsgröße keine oder nur ungenau Messsignale liefern. Auch kann eine weitere Verarbeitung der Signale in bestimmten Betriebssituationen des Fahrzeuges (z. B. während sich das Fahrzeug in dichtem Verkehr bewegt) nicht oder nur eingeschränkt möglich sein oder für das Fahrerassistenzsystem zu unbrauchbaren Ergebnissen führen. Weiterhin gibt es physikalische Grenzen (z. B. Temperaturbereich) für den Einsatz des Systems und Grenzen oder Lücken der Auswertbarkeit einer tatsächlichen Betriebsituation des Fahrzeuges durch das System. Z. B. kann das in der DE 198 04 641 A1 beschriebene Fahrerassistenzsystem (s. o.) nicht auf stehende Fahrzeuge reagieren, da es außer stehenden Fahrzeugen in der Regel eine Vielzahl anderer unbewegter Objekte gibt.

Ferner wird vorgeschlagen, dass ein Fahrerassistenzsystem ein Hilfesystem zum Ausgeben von Hilfeinformationen an einen Fahrer des Fahrzeuges aufweist und dass das Fahrerassistenzsystem Erkennungsmittel zum Erkennen aufweist, ob das Fahrerassistenzsystem in dem momentanen und/oder einem für die Zukunft zu erwartenden Zustand der Umgebung und/oder Betriebszustand des Fahrzeuges zuverlässig betrieben werden kann. Das Hilfesystem ist mit den Erkennungsmitteln verbunden und ist ausgestaltet, dem Fahrer während eines Betriebes des Fahrzeuges einen Hinweis zu geben, wenn das Fahrerassistenzsystem nicht zuverlässig betrieben werden kann.

Der vorliegenden Erfindung liegt der Gedanke zugrunde, dass es für Fahrer immer schwieriger wird, die Nutzung und/oder Bedienung zunehmend komplexer werdender Fahrerassistenzsysteme zu erlernen. Schriftliche Bedienungsanleitungen werden daher immer umfangreicher und komplizierter. Zudem ist es bekannt, dass nur wenige Nutzer Bedienungsanleitungen vollständig durchlesen und/oder sich während der Nutzung bzw. Bedienung an alle wichtigen Details erinnern. Es erhöht daher die Sicherheit, wenn Hilfeinformationen über die richtige Nutzung und/oder Bedienung, insbesondere über Systemgrenzen während des Betriebes des Fahrzeuges an den Fahrer ausgegeben werden, und zwar vorzugsweise dann, wenn eine den jeweiligen Hilfeinformationen zugeordnete Betriebssituation des Fahrerassistenzsystems bevorsteht und/oder eingetreten ist.

Beispielsweise ist ein Fahrerassistenzsystem ausgelegt, einen ausreichenden Abstand zu vorausfahrenden Fahrzeugen einzuhalten. Das Fahrerassistenzsystem reagiert jedoch nur auf sich bewegende Objekte und kann daher nicht zuverlässig einen Abstand zu stehenden oder sehr langsam fahrenden Fahrzeugen wahren, d. h. das Fahrzeug rechtzeitig zum Halt bringen. Wenn die Geschwindigkeit eines vorausfahrenden Fahrzeuges auf oder unter einen vorgegebenen Grenzwert fällt, wird aus diesem Grund ein Warnhinweis an den Fahrer ausgegeben.

Vorzugsweise werden die Hilfeinformationen zumindest teilweise als akustische und/oder haptische Hinweise ausgegeben, damit die Aufmerksamkeit des Fahrers für visuelle Eindrücke der Umgebung des Fahrzeuges nicht beeinträchtigt wird. Beispielsweise kann ein Warnsignal dadurch an den Fahrer ausgegeben werden, dass zumindest ein Bereich des Lenkrades und/oder des Fahrersitzes einen haptischen Hinweis ausgibt, z. B. in Form einer mehrfach unterbrochenen Vibration. Optional kann zusätzlich eine Erklärung der Situation per Sprachausgabe erfolgen.

Bevorzugt wird weiterhin, dass erkannt wird, welcher Fahrer das Fahrzeug fährt, und davon abhängig entschieden wird, ob und/oder welche Hilfeinformation an den Fahrer ausgegeben werden. Damit kann beispielsweise zwischen einem routinierten Nutzer des Fahrerassistenzsystems und einem neuen Nutzer unterschieden werden. Während der neue Nutzer noch auf eine Vielzahl von Betriebsituationen des Fahrerassistenzsystems aufmerksam gemacht wird, werden an den routinierten Nutzer allenfalls noch wenige Hilfeinformationen ausgegeben. Auf diese Weise kann vermieden werden, dass ein fortgeschrittener oder routinierten Nutzer mit unnötigen Informationen versorgt wird und aus diesem Grund allen ausgegebenen Hilfeinformationen keine oder nur noch geringe Aufmerksamkeit schenkt.

Eine Möglichkeit, Nutzer nach Ihren unterschiedlichen Erfahrungen zu unterscheiden, besteht darin, jedes Mal dann, wenn ein bestimmter Fahrer das Fahrerassistenzsystem einschaltet oder abgeschaltet, den Wert eines Zählers um eins zu erhöhen. Bevorzugt wird jedoch, eine Historie von bereits an den Fahrer ausgegebenen Hilfeinformationen aufzuzeichnen und anhand dieser Historie zu entscheiden, ob und/oder welche Hilfeinformationen an den Fahrer ausgegeben werden. Alternativ oder zusätzlich können eine oder beide der folgenden Maßnahmen zur Bestimmung des Erfahrungsgrades eines bestimmten Fahrers durchgeführt werden: Eine Reaktion des Fahrers auf bereits ausgegebene Hilfeinformationen wird ausgewertet. Eine Verwendung des Fahrerassistenzsystems und/oder zumindest einer anderen Einrichtung des Fahrzeuges durch den Fahrer wird ausgewertet. Weiterhin können z. B. Bedienungsfehler des Fahrers erfasst werden und davon abhängig entschieden werden, ob und/oder welche Hilfeinformationen an den Fahrer ausgegeben werden.

Zweckmäßig erscheint, an den selben Fahrer bestimmte Hilfeinformationen nur eine vorgegebene Anzahl von Malen auszugeben, beispielsweise zwei oder drei Mal. Danach kann davon ausgegangen werden, dass der Fahrer diese Hilfeinformationen nicht mehr benötigt. Bei einer Weiterbildung kann außerdem oder alternativ berücksichtigt werden, wie lange es her ist, dass bestimmte Hilfeinformationen an den Fahrer zuletzt ausgegeben wurden. Liegt die letzte Ausgabe länger als eine vorgegebene Zeitspanne zurück, werden die Hilfeinformationen an diesen Fahrer unabhängig davon ausgegeben, ob Sie bereits vorher schon ein Mal oder mehrmals ausgegeben wurden. Es ist auch möglich, die Ausgabe bestimmter Hilfeinformationen von einer Kombination der Zeitspanne seit der letzten Ausgabe und der Anzahl der vergangenen Ausgaben abhängig zu machen.

Es kann beispielsweise unter Anwendung biometrischer Verfahren und/oder anhand eines eindeutig einer Person zugeordneten Gegenstandes (z. B. einer personalisierten Chipkarte) festgestellt werden, welcher Fahrer des Fahrzeug fährt.

Die Erfindung wird nun anhand von Ausführungsbeispielen näher erläutert. Sie ist jedoch nicht auf die Ausführungsbeispiele beschränkt. Bei der Erläuterung wird Bezug auf die beigefügte Zeichnung genommen. In der Zeichnung zeigt:

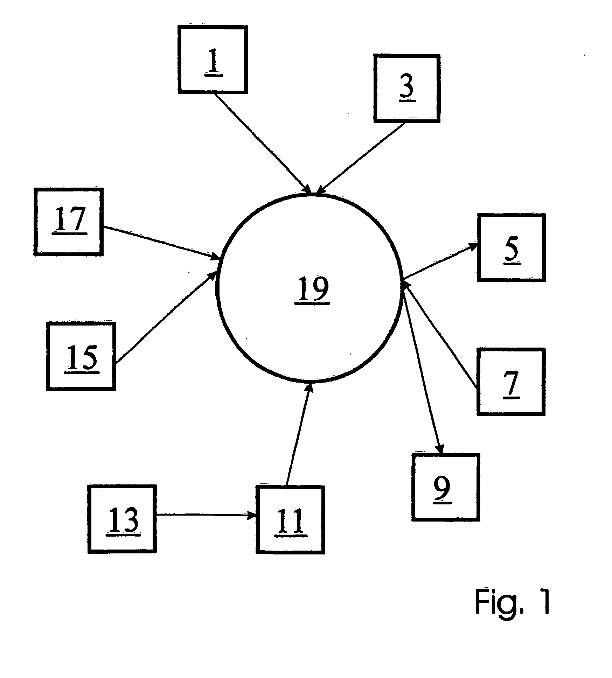

Fig. 1 eine schematische Darstellung eines Fahrerassistenzsystems mit Hilfesystem.

Das Fahrerassistenzsystem ist beispielsweise das von den Bayerischen Motoren Werken AG eingesetzte Active Cruise Control (ACC)- System.

Eine zentrale Einheit 19 des Hilfesystems weist Steuerungsmittel zur Steuerung des Hilfesystems, Erkennungsmittel zur Erkennung einer aktuellen Betriebssituation und Mittel zum Empfang und zur Ausgabe von Signalen von bzw. zu peripheren Komponenten 1 bis 17 auf. Die Steuerungsmittel und die Erkennungsmittel sind beispielsweise Teil einer mikroelektronischen Recheneinheit, die auch Funktionen außerhalb des Hilfesystems erfüllen kann.

Eine Fahrererkennungseinheit 1 liefert der zentralen Einheit 19 Informationen über den Fahrer, der derzeit das Fahrzeug führt. In der zentralen Einheit 19 sind Daten über all diejenigen Fahrer gespeichert, die in der Vergangenheit das Fahrzeug geführt haben. Wenn erkannt wird, dass der derzeitige Fahrer einer dieser Fahrer ist, werden die dem derzeitigen Fahrer zugeordneten Daten geladen. Diese Daten können insbesondere Informationen über folgendes enthalten: bereits an den Fahrer ausgegebene Hilfeinformationen, vergangene Betriebsituationen des Fahrerassistenzsystems bzw. des Fahrzeuges, Lernfortschritt des Fahrers bei der Verwendung des Fahrerassistenzsystems, Art der Nutzung des Fahrerassistenzsystems und anderer Einrichtungen des Fahrzeugs durch den Fahrer, frühere Befehle des Fahrers an das Fahrerassistenzsystem und/oder persönliche Einstellungen des Fahrerassistenzsystems.

Aus den geladenen Daten stellt die zentrale Einheit 19 fest, welcher Hilfemodus diesem Fahrer zugeordnet ist. Bei einer einfachen Ausführung des Hilfesystems gibt es zwei Hilfemodi. Im ersten Hilfemodus, dem Passiv-Modus, werden Hilfeinformationen nur dann ausgegeben, wenn der Fahrer dies wünscht. Die aktuelle Verfügbarkeit einer Hilfeinformation wird dem Fahrer signalisiert, beispielsweise in akustischer Form über eine Ausgabeeinheit 5 und/oder in haptischer Form über eine Ausgabeeinheit 9. Die Hilfeinformation kann dann z. B. durch Betätigen eines Bedienungselementes 17 und/oder durch Sprechen bestimmter Worte, wie "ACC-Hilfe", abgerufen werden. Die gesprochenen Worte werden unter Verwendung einer Spracheingabe-Einheit 7 erkannt.

Im zweiten Hilfemodus, dem Aktiv-Modus, werden die Hilfeinformationen automatisch dann ausgegeben, wenn sie in Zusammenhang mit einer entsprechenden Betriebsituation des Fahrerassistenzsystems zur Verfügung stehen. Insbesondere im Aktiv-Modus kann die Ausgabe der Hilfeinformationen davon abhängig gemacht werden, ob die Ausgabe den Fahrer in einer aktuellen Verkehrssituation über Gebühr belastet, insbesondere wegen Ablenkung des Fahrers von einer kritischen Verkehrssituation eine Gefahr darstellt. Auf die Erfassung von Verkehrssituationen wird noch näher eingegangen.

Bei anderen möglichen Ausführungsformen des Hilfesystems gibt es mehr als zwei Hilfemodi, in denen beispielsweise Hilfeinformationen in verschiedener Form (z. B. akustisch, haptisch und/oder visuell) und/oder in verschiedener Ausführlichkeit ausgegeben werden.

Ein für den jeweiligen Fahrer geeigneter Hilfemodus kann entweder automatisch, durch Auswertung des Verhaltens des Fahrers, oder von dem Fahrer selbst gewählt werden.

Über eine Fahrzeugdaten-Erfassungseinheit 3 erhält die zentrale Einheit 19 Informationen über relevante Betriebsdaten des Fahrzeuges, wie z. B. die Fahrgeschwindigkeit, eine aktuelle Beschleunigung, einen Lenkwinkel einer Fahrtrichtungs-Lenkeinrichtung und/oder einen Bremsdruck einer Bremsanlage des Fahrzeuges. Zusätzlich erhält die zentrale Einheit 19 von einer Umgebungsdaten-Erfassungseinheit 15 Informationen über die Umgebung des Fahrzeuges, insbesondere zusätzliche Informationen, die nicht für den eigentlichen Betrieb des Fahrerassistenzsystems erforderlich sind. Hierzu zählen beispielsweise Informationen über eine aktuelle Position des Fahrzeuges, den Typ einer derzeit befahrenen Strasse und/oder das aktuelle Wetter.

Ferner erhält die zentrale Einheit 19 von einer Fahrerassistenz-Einheit 11 diejenigen Informationen über die Umgebung des Fahrzeuges, die für den eigentlichen Betrieb des Fahrerassistenzsystems erforderlich sind, beispielsweise Informationen über Verkehrsobjekte, deren Abstand von dem Fahrzeug, deren Bewegungsverhalten und/oder über Verkehrszeichen. An die Fahrerassistenz-Einheit, die die eigentlichen Aufgaben des Fahrerassistenzsystems erfüllt, ist eine Bedienungseinheit 13 mit Bedienungselementen des Fahrerassistenzsystems angeschlossen.

Aus den von den Einheiten 3 und 15 sowie von der Fahrerassistenz-Einheit 11 erhaltenen Informationen ermittelt die zentrale Einheit 19 wiederholt einen kombinierten Zustand der Umgebung des Fahrzeuges und Betriebszustand des Fahrerassistenzsystems und ermittelt ferner unter Berücksichtigung der Daten des aktuellen Fahrers, ob Hilfeinformationen dem Fahrer angeboten und/oder an diesen ausgegeben werden sollen. Gegebenenfalls werden hierzu die Ausgabeeinheiten 5, 9 verwendet.

Zu den angebotenen oder ausgegebenen Hilfeinformationen gehören Informationen über das Erreichen oder mögliche Erreichen von Systemgrenzen des Fahrerassistenzsystems, aber auch allgemeine Informationen über die Bedienung des Fahrerassistenzsystems.

Insbesondere können Hilfeinformationen der folgenden Art und/oder in der folgenden Weise angeboten und ausgegeben werden:
· Schaltet ein Fahrer erstmalig das Fahrerassistenzsystem ein, erhält er in akustischer und/oder visueller Form (z. B. über einen Bordmonitor) eine Einführung in die Benutzung des Fahrerassistenzsystems. Bereits in diesem Stadium kann der Fahrer zwischen verschiedenen Hilfemodi wählen.
· Wird das Fahrerassistenzsystem automatisch abgeschaltet, weil eine Systemgrenze erreicht oder überschritten wurde, wird ein Hinweis angeboten oder ausgegeben, dass und/oder warum das Fahrerassistenzsystem abgeschaltet wird. Beispielsweise ist das Fahrerassistenzsystem ein System, welches die Fahrgeschwindigkeit des Fahrzeuges abhängig von der Geschwindigkeit vorausfahrender Fahrzeuge beeinflusst. Unterschreitet die Geschwindigkeit eines vorausfahrenden Fahrzeuges einen vorgegebenen Grenzwert, wird das Fahrerassistenzsystem abgeschaltet.
· Wird das Fahrerassistenzsystem in einem Betriebsbereich betrieben, in dem das Risiko einer Fehlfunktion besteht, wird ein entsprechender Warnhinweis angeboten oder ausgegeben. Beispielsweise reagiert das bereits zuvor beschriebene Fahrerassistenzsystem zwar auf vorausfahrende Fahrzeuge, die langsam fahren, jedoch nicht auf Fahrzeuge, sobald sie stehen geblieben sind. Wenn festgestellt wird, dass ein vorausfahrendes Fahrzeug langsamer fährt als ein vorgegebener Grenzwert, wird der entsprechende Warnhinweis angeboten oder ausgegeben. Bei einer Variante wird der Warnhinweis angeboten oder ausgegeben, wenn das Erreichen der Systemgrenze messtechnisch nicht zuverlässig festgestellt werden kann, z. B. wenn die Geschwindigkeit des vorausfahrenden Fahrzeuges in einem Geschwindigkeitsbereich nahe null liegt, der messtechnisch nur ungenau erfasst werden kann.
· Wenn festgestellt wird, dass das Fahrerassistenzsystem unter Bedingungen, insbesondere in einem Umgebungszustand, eingesetzt wird, für den es nicht geeignet ist, wird ein entsprechender Hinweis angeboten oder ausgegeben. Beispielsweise kann das Fahrerassistenzsystem nicht für den Einsatz innerhalb von Städten bei hoher Verkehrsdichte konzipiert sein.

## Patentansprüche

1. Verfahren zum Betreiben eines Fahrerassistenzsystems für ein Strassenfahrzeug, wobei:
- Umgebungsinformationen über eine Umgebung des Fahrzeuges erfasst werden und
- eine Bewegungsrichtung und/oder eine Geschwindigkeit des Fahrzeuges abhängig von den Umgebungsinformationen beeinflusst werden,
- während eines Betriebes des Fahrzeuges Hilfeinformationen betreffend das Fahrerassistenzsystem an einen Fahrer des Fahrzeuges ausgegeben werden,
- erkannt wird, ob das Fahrerassistenzsystem in einem momentanen und/oder einem für die Zukunft zu erwartenden Zustand der Umgebung und/oder Betriebszustand des Fahrzeuges zuverlässig betrieben werden kann, und
- dem Fahrer mittels der Hilfeinformationen ein Hinweis gegeben wird, wenn das Fahrerassistenzsystem nicht zuverlässig betrieben werden kann,
**dadurch gekennzeichnet, dass**
- erkannt wird, welcher Fahrer das Fahrzeug fährt, und davon abhängig entschieden wird, ob und/oder welche Hilfeinformationen an den Fahrer ausgegeben werden,
- wobei unter Berücksichtigung einer Historie von bereits an den Fahrer ausgegebenen Hilfeinformationen entschieden wird, ob und/oder welche Hilfeinformationen an den Fahrer ausgegeben werden.

2. Verfahren nach dem Anspruch 1, wobei eine Reaktion des Fahrers auf bereits ausgegebene Hilfeinformationen ausgewertet wird und wobei davon abhängig entschieden wird, ob und/oder welche Hilfeinformationen an den Fahrer ausgegeben werden.

3. Verfahren nach einem der Ansprüche 1 bis 2, wobei eine Verwendung des Fahrerassistenzsystems und/öder zumindest einer anderen Einrichtung des Fahrzeuges durch den Fahrer ausgewertet wird und wobei davon abhängig entschieden wird, ob und/oder welche Hilfeinformationen an den Fahrer ausgegeben werden.

4. Fahrerassistenzsystem für ein Strassenfahrzeug, wobei das Fahrerassistenzsystem folgendes aufweist:
- Erfassungsmittel (11) zum Erfassen von Umgebungsinformationen über eine Umgebung des Fahrzeuges
- Beeinflussungsmittel (11) zum Beeinflussen einer Bewegungsrichtung und/oder einer Geschwindigkeit des Fahrzeuges abhängig von den Umgebungsinformationen,
- ein Hilfesystem (1 bis 9, 15 bis 19) zum Ausgeben von Hilfeinformationen an einen Fahrer des Fahrzeuges und
- Erkennungsmittel (19) zum Erkennen, ob das Fahrerassistenzsystem in dem momentanen und/oder einem für die Zukunft zu erwartenden Zustand der Umgebung und/oder Betriebszustand des Fahrzeuges 25 zuverlässig betrieben werden kann,
wobei das Hilfesystem (1 bis 9, 15 bis 19) mit den Erkennungsmitteln (19) verbunden ist und ausgestaltet ist, dem Fahrer während eines Betriebes des Fahrzeuges einen Hinweis zu geben, wenn das Fahrerassistenzsystem nicht zuverlässig betrieben werden kann,
**gekennzeichnet durch**:
- Erkennungsmittel (19) zum Erkennen, welcher Fahrer das Fahrzeug fährt, und davon abhängig entschieden wird, ob und/oder welche Hilfeinformationen an den Fahrer ausgegeben werden, und
- wobei unter Berücksichtigung einer Historie von bereits an den Fahrer ausgegebenen Hilfeinformationen entschieden wird, ob und/oder welche Hilfeinformationen an den Fahrer ausgegeben werden.

## Claims

1. A method for operating a driver assistance system for a road vehicle, wherein:
- environmental information about an environment of the vehicle is detected and
- a movement direction and/or a speed of the vehicle are influenced depending on the environmental information,
- during operation of the vehicle, auxiliary information relating to the driver assistance system is issued to a driver of the vehicle,
- it is recognised whether the driver assistance system can be reliably operated in a momentary state, and/or a state to be expected in the future, of the environment and/or an operating state of the vehicle, and
- the driver is given an indication by means of the auxiliary information if the driver assistance system cannot be reliably operated,
**characterised in that**
- it is recognised which driver is driving the vehicle, and, depending on this, a decision is made whether and/or which auxiliary information is issued to the driver,
- wherein, taking into account a history of auxiliary information already issued to the driver, a decision is made whether and/or which auxiliary information is issued to the driver.

2. A method according to claim 1, wherein a reaction of the driver to auxiliary information already issued is evaluated and, depending on this, a decision is made whether and/or which auxiliary information is issued to the driver.

3. A method according to claim 1 to 2, wherein a use of the driver assistance system and/or at least one other device of the vehicle by the driver is evaluated and wherein, depending on this, a decision is made whether and/or which auxiliary information is issued to the driver.

4. A driver assistance system for a road vehicle, wherein the driver assistance system has the following:
- detection means (11) for detecting environmental information about an environment of the vehicle,
- influencing means (11) for influencing a movement direction and/or speed of the vehicle depending on the environmental information,
- an auxiliary system (1 to 9, 15 to 19) for issuing auxiliary information to a driver of the vehicle and
- recognition means (19) for recognising whether the driver assistance system can be reliably operated in the momentary state and/or a state to be expected in the future of the environment and/or in the operating state of the vehicle, wherein the auxiliary system (1 to 9, 15 to 19) is connected to the recognition means (19) and configured to give the driver an indication during operation of the vehicle if the driver assistance system cannot be operated reliably,
**characterised by**:
- recognition means (19) for recognising which driver is driving the vehicle, and depending on this, a decision is made whether and/or which auxiliary information is issued to the driver, and
- wherein, taking into account a history of auxiliary information already issued to the driver, a decision is made whether and/or which auxiliary information is issued to the driver.

## Revendications

1. Procédé de gestion d'un système d'assistance à la conduite d'un véhicule routier selon lequel
- on saisi les informations de l'environnement du véhicule et,
- on influence la direction de déplacement et/ou la vitesse du véhicule en fonction des informations d'environnement,
- pendant le fonctionnement du véhicule, le système d'assistance à la conduite émet des informations d'assistance à destination du conducteur du véhicule,
- on détecte si le système d'assistance à la conduite peut fonctionner de manière fiable dans un état instantané et/ou dans un état futur prévisible de l'environnement et/ou un état de fonctionnement du véhicule et,
- on fournit au conducteur une indication par l'intermédiaire des informations d'assistance lui indiquant si le système d'assistance à la conduite ne peut pas fonctionner de manière fiable,
**caractérisé en ce que**
- on reconnaît le conducteur du véhicule et en fonction de cela on décide si des informations d'assistance lesquelles seront émises à destination du conducteur,
- et en tenant compte de l'historique des informations d'assistance déjà émises à destination du conducteur on décide si des informations auxiliaires ou lesquelles doivent être fournies au conducteur.

2. Procédé de gestion d'un système d'assistance à la conduite selon la revendication 1 selon lequel on exploite une réaction du conducteur à des informations d'assistance déjà émises et
on décide en fonction de cela si des informations d'assistance ou lesquelles doivent être fournies au conducteur.

3. Procédé de gestion d'un système d'assistance à la conduite selon l'une des revendications 1 et 2 selon lequel on exploite l'utilisation du système d'assistance à la conduite et/ou d'au moins une autre installation du véhicule par le conducteur et
en fonction de cela on décide si des informations auxiliaires ou lesquelles doivent être fournies au conducteur.

4. Système d'assistance à la conduite pour un véhicule routier, le système d'assistance comprenant les moyens suivants :
- des moyens de saisie (11) pour saisir les informations d'environnement relatives à l'environnement du véhicule,
- un moyen d'influence (11) pour influencer une direction de mouvement et/ou une vitesse du véhicule en fonction des informations ambiantes,
- un système d'assistance (1-9, 15-19) pour fournir des informations d'assistance au conducteur du véhicule et,
- des moyens de reconnaissance (19) pour reconnaître si le système d'assistance à la conduite peut être utilisé dans l'état instantané et/ou dans l'état prévisionnel futur de l'environnement et/ou l'état de fonctionnement du véhicule permet un fonctionnement fiable,
- le système d'assistance (1-9, 15-19) étant relié à des moyens de reconnaissance (19) et il est réalisé pour fournir au conducteur une indication pendant le fonctionnement du véhicule pour lui indiquer que le système d'assistance à la conduite ne peut pas fonctionner de manière fiable,
**caractérisé par**
- des moyens de reconnaissance (19) pour reconnaître le conducteur du véhicule et de décider en fonction de cela si des informations auxiliaires ou lesquelles seront fournies au conducteur et
- en tenant compte de l'historique des informations auxiliaires déjà fournies au conducteur, de décider si des informations d'assistance et lesquelles doivent être fournies au conducteur.
